# EUROPEAN PATENT SPECIFICATION

(11) **EP 1 640 151 B1**
(45) Date of publication and mention of the grant of the patent: **03.10.2007**
(21) Application number: 05108402.8
(22) Date of filing: 13.09.2005
(51) Int. Cl.: B32B 25/10, B60K 15/03

(54) **Fireproof flexible fuel tank structure**
Feuerfester flexibler Treibstofftank
Réservoir flexible et ignifuge pour carburant

(30) Priority: 28.09.2004 IT RM20040462
(43) Date of publication of application: 29.03.2006
(73) Proprietor: M.E.RIN S.r.l., 00155 Roma (IT)
(72) Inventor: GIAMBARTOLOMEI, Enzo, 00155, Roma (IT)
(74) Representative: Leone, Mario

(56) References cited:
- WO-A-02/092901
- GB-A- 2 054 457
- US-A- 3 616 189
- US-A- 3 772 071

## Description

The present invention relates to a fireproof structure for flexible tanks for fuel and, more precisely, to a flexible structure suitable for providing an effective flame-retardant barrier for flexible tanks for fuel.

In the automotive and aeronautical fields the use of flexible tanks for fuel is widely known; said tanks are particularly required in such applications, given the need to make the most of the spaces (with the most varied sizes and dimensions) for their housing in order to obtain a better weight balancing and distribution for the vehicle or aircraft.

This is particularly required in the aeronautical field, where fuel tanks should compulsorily be housed into spaces obtained in wings or root ribs. The same holds true in automotive use for racing, where there is the same need to exploit all of the useful space to obtain the fuel tank and concomitantly attain a good weight distribution, thereby improving the vehicle attitude.

These flexible tanks are typically made with walls having a flexible structure, said flexible structure consisting in a sandwich structure wherein at the center thereof a high-toughness Nylon fiber backing is arranged, to be then lined on both faces by a fuel-resistant nitrile blend lamination or layer. Moreover, in order to improve the resistance of said sandwich structure, further layers may be required. E.g., it may be envisaged for the air-contacting outermost layer to exhibit elevated anti-ageing and anti-ozone features.

For the making of said sandwich structures it is provided the laying of the rubberized fabric and of the raw protective laminations or layer, to then subject the structure thus assembled to an autoclave curing cycle, according to the manufacturer's specifications.

Moreover, it is provided that said tanks may be filled, during their making, with anti-explosion fillers made of polyurethane sponge, which when arranged inside the tank tend to eliminate or drastically reduce the chance of formation of explosive mixtures. This application is particularly required in the military field, in armoured vehicles and in the field of competitive sports.

However, a drawback entailed by such a flexible structure for fuel tanks is that, given the nature of the materials used, it cannot exhibit flame-retardant features.

Hence, there is a remarkable drawback in the use of those tanks in case such a feature is required by the user or by related laws.

Another field of use for fuel tanks where a certain flame resistance is required is the nautical one. According to current laws (ISO 10088), in crafts using petrol as fuel, the tank containing said fuel should have self-extinguishing or flame-retardant features. For this reason, metallic tanks are usually employed. On the other hand, the use of flexible tanks (more versatile in their use and easily mouldable to be adjusted to any hull shape) is only allowed for non-flammable fuels, like, e.g., gas oil.

However, the use of rigid tanks entails the drawback of making an access thereto difficult after in-hull installation; they also have considerable weights and dimensions. Therefore, in this field the use of flexible tanks would be desirable also in case of containing flammable fuels, like, e.g., petrols.

Hence, object of the present invention is to solve said drawbacks by providing a flexible tank structure having marked flame-retardant features, thereby making their use possible also in the fields of use where such a fire resistance feature is required.

Another object of the present invention is to provide a flame-retardant flexible tank structure having high thermal and mechanical resistance, high reliability and sturdiness.

Hence, the present invention provides a flexible tank structure according to claim 1.

Hereinafter, there will be provided a detailed description of a preferred embodiment of a fireproof flexible tank structure according to the present invention, given by way of a non-limiting example and making reference to the annexed drawings, wherein:
figure 1 schematically and partially illustrates a cross section of a fuel tank wall incorporating a flexible structure made according to the state of the art; and
figure 2 schematically and partially illustrates a cross section of a fuel tank wall incorporating a flexible structure made according to the present invention.

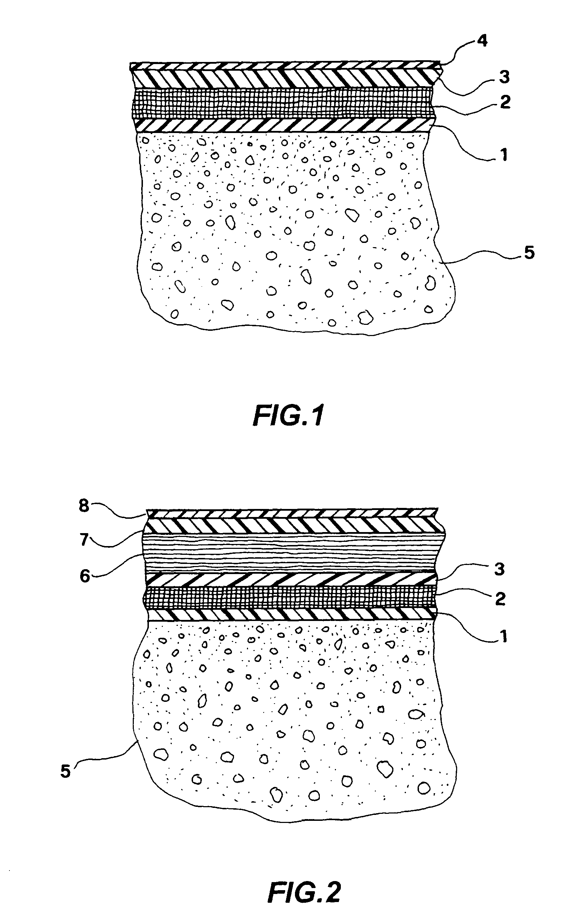

Referring now to figure 1, a structure for manufacturing flexible tanks for fuel of the state of the art is schematically and sectionally shown therein.

Typically, the structure provides a first inner layer 1 of sheet of fuel-resistant nitrile blend, since this material forms the inner surface of the tank into contact with the fuel. Then, a subsequent textile layer 2 made of high-toughness Nylon fiber is provided. The layer 2 forms the "bearing" portion of the flexible tank, and it is suitable for providing mechanical resistance features thereto. It has to be highlighted that the fabric with which the layer 2 is made can alternatively be selected among the following materials: polyamide fiber, polyester fiber, aramid fiber or the like.

Above the second layer 2 it is provided an outer third layer 3 made of a sheet of fuel-resistant nitrile blend of the same kind of layer 1. Moreover, it has to be specified that at the junction spots (or joints) of the tank and/or of the fabric 2 it is provided the application of a further junction strip (not shown in the figures) always in nitrile blend and, alike layers 1 and 3, in order to seal the overlapping junctions of the fabric 2 made during the manufacturing of the tank.

Moreover, it has to be specified that the material of the layers 1 and 3, apart from being made of a blend of nitrile polymers, alternatively may also be made of a blend of epichlorohydrin (ECO) elastomers, fluorinated elastomers and the like.

Therefore, the outer surface is typically finished with a protective layer 4, in order to provide resistance to ozone and to ageing.

For the manufacturing of the tank, it is provided the use of rubberized fabrics and raw calendared sheets that, once assembled, are subsequently subjected to an autoclave curing cycle.

Moreover, typically there can be provided an anti-explosion filler material 5 arranged inside the tank during its manufacturing. Typically, as anti-explosion filler material suitably shaped forms of polyurethane sponge or the like are used. In practice, such a material, which remains inside the tank, tends to eliminate or drastically reduce the chance of formation of explosive mixtures. Such sponges are commonly used in several military vehicles like airplanes, trucks, etc. and in armoured vehicles.

Furthermore, the tanks thus manufactured are typically equipped with standard fittings like inspection flanges, suction/vent hoses, level meter flanges, etc., all known to the art and not shown in the figures.

Referring now to figure 2, a tank wall manufactured with the fireproof flexible tank structure according to the present invention is partially and sectionally illustrated therein. For simplicity's and clarity's sake in the illustration and in the description, alike parts will have alike numbers.

According to the invention, the structure has an inner layer 1 and further rubberized fabric 2 whose textile backing consists of high-toughness Nylon or the like. Then, a successive outer layer 3 externally lines the Nylon tissue. Alike what has been described in the foregoing, in this case as well there are provided overlapping junctions at the joints of the fabric 2 (not shown in the figure). Subsequently, the lamination 3 is dissolved by brush, with solutions of a nitrile blend strengthened with various attachment-promoting resins. Typically, the resins used are Resorcinol/ Formaldehyde/ Phenol. Moreover, the materials 1 and 3 for lining the fabric 2 on both faces thereof are obtained by calendering with a nitrile-based rubber blend or the like.

Subsequently, it is provided a layer 6 of silica fiber felt (consisting of 93-95% SiO2 silicates). This layer exhibits resistance to heat and to temperatures of up to 1000°C. Purpose of the present layer is to protect the underlying layers from the action of heat, preserving their physical features.

Moreover, according to the invention it is provided a further layer 7 of charged nitrile-based blend sheet applied onto the silica felt layer 6 and with related overlapping junctions at the joints. The blend 7 comprises an array of flame-retardant and intumescent products, among which lamellar graphite (about 40% b/w with respect to the total weight of the blend). Said products, when into contact with a flame, swell up and develop a carbonaceous crust, thereby forming a mechanical barrier sealing off the underlying layers from the action of heat (better illustrated below).

Furthermore, it is provided an outer layer (lamination) 8 formed by brush-painting of a methylethylketone solution of a nitrile-based blend charged with a vinyl acetate resin, in order to protect the underlying layers from the ageing action of ozone and of atmospheric agents in general.

In this case as well, the manufacturing of the tank occurs as in the case of the prior-art tanks. Therefore, on customer's demand, it can be provided that during the manufacturing inside the tank there be arranged an anti-explosion filler material 5 (suitably shaped polyurethane sponge or the like). The function of the anti-explosion material has already been described in the foregoing.

Moreover, the tanks thus made may be equipped with standard fittings like inspection flanges, suction/vent hoses, level meter flanges, etc., all known to the art and not shown in the figures.

Hereinafter, there will be provided two examples of fire resistance (according to ISO Standard 10088/2001), wherein two flexible tanks for fuel have been tested. The first tank was manufactured with a flexible structure of the state of the art, whereas the second tank was manufactured with a fireproof flexible structure according to the present invention.

### EXAMPLE 1

A flexible tank was manufactured with a structure of the state of the art. The manufacturing of the tank was carried out with rubberized fabrics and sheets of a nitrile blend raw-calendered and subsequently subjected to an autoclave curing cycle. In the manufacturing, anti-explosion material was inserted inside the tank as described hereto. The flexible structure forming the tank walls had the following features:
Backing fiber for rubberized fabric:
Nylon 6.6
- Weave:: Panama 2x2
- Threads/dm (Warp x Weft):: 200x180
- Fabric weight:: 360 gr/m2
- Tank wall thickness:: from 1.2 to 1.4 mm.
- Unitary weight of wall:: 1300 gr/m2.

The mechanical features of this structure meet the requirements of FIA Standard FT3/1999.

The nitrile blend forming the linings of the tank walls is made as follows:

| Component | Quantity b/w (%) / total weight |
|---|---|
| Nitrile polymer | 20.6 |
| Nitrile polymers/PVC blend | 21.3 |
| Plasticizer | 0.35 |
| Activator | 2.12 |
| Age resister against chemical/physical agents | 1.80 |
| Oils | 12.8 |
| Sulphur | 0.52 |
| Carbon black | 41.0 |

If necessary, the blend may be further charged with retarding or accelerating substances, according to shelf life or processing conditions.

The tank thus made is ready to be subjected to the fire resistance test according to ISO Standard 10088/2001. According to the latter, it is provided a resistance to fire from the combustion of a hydrocarbon (toluol heptane) poured onto the outer surfaces of the tank and in its proximity. The resistance test should last 2.5 min, in which the tank has to be uncompromised in its holding functions even when the integrity of the outer surfaces thereof is compromised.

Then, the fire resistance test was conducted on the tank, which readily demonstrated its unsuitability by completely bursting into flames at +40 s.

### EXAMPLE 2

A flexible tank with the structure according to the present invention was manufactured. For the manufacturing of the tank a first flexible structure was made with rubberized Nylon fabric and sheets of charged and then raw-calendered nitrile blend, according to the process of the state of the art. Then, upon having assembled the structure, onto its outer surface there were arranged a first layer of silica fiber felt having a ≥2mm thickness (thickness and density variable depending on customer's needs) and a further layer of charged intumescent nitrile blend sheet, according to the present invention. Then, it was applied an anti-ageing and ozone-resisting protective layer of the above-described type. The tank thus assembled is subsequently subjected to an autoclave curing cycle.

The backing textile layer is made as follows:
Backing fiber for rubberized fabric:
Nylon 6.6
- Weave:: Panama 2x2
- Threads/dm (Warp x Weft):: 200x180
- Fabric weight:: 360 gr/m2
Tank wall thickness (full structure): from 3.7 to 3.9 mm.
Unitary weight of wall: 2000 gr/m2.

The mechanical features of this structure meet the requirements of FIA Standard FT3/1999.

The intumescent nitrile blend forming the outermost lining of the tank walls (layer 7) was charged with intumescent charges, in a quantity not lower than the 10% b/w with respect to the total weight of the blend. This blend has the following composition:

| Component | Quantity b/w (%) / total weight |
|---|---|
| Nitrile polymers | 29.5 |
| Plasticizer | 0.21 |
| Activator | 1.00 |
| Mineral charges | 21.3 |
| Flame-retardant charge | 1.46 |
| (Chlorinated paraffin and/or paraffin)oils | 11.8 |
| Age resister against chemical/physical agents | 0.9 |
| Carbon black | 0.6 |
| Intumescent charges | 33.3 |
| Sulphur | 0.36 |

Alike the blend of the inner structural layers 1 and 3, if necessary, the mixture of the above outer layer 7 may be further charged with retarding or accelerating substances.

The tank thus processed is ready to be subjected to the fire and pressure resistance test according to ISO Standard 10088/2001.

Then, the fire resistance test was conducted on the tank, which readily demonstrated excellent resistance to flame and heat. In fact, even after the maximum lasting time of the test (2.5 min) the same tank appeared whole and still resisted flame, exhibiting no structural decay even though remarkable intumescence appeared on its outer surfaces.

After the flame exposure test the tank was subjected to an internal pressure of 0.2 bar, highlighting no inner layer loss or detachment. Then, a destructive test was conducted on the tank wall to analyze the inside thereof.

The test revealed the inner walls to be intact although the outer ones had been subjected to flame for time periods lengthier than the ones set by Standard.

## Claims

1. A structure for flexible tanks for fuel, comprising:
· a first layer (1) of fuel-resistant elastomer-based blend forming the inner surface of the tank once assembled;
· a second fabric layer (2) made of synthetic fiber fabric applied above said first layer (1); and
· a third layer (3) of fuel-resistant elastomer-based blend applied above said fabric (2), **characterised in that** it further comprises:
· a fourth median layer (6) of fireproof material comprising silica fiber felt arranged above said third layer (3); and
· a fifth outer layer (7) of synthetic elastomer-based blend charged with flame-retardant and intumescent products, applied above said fourth median layer (6).

2. The structure for flexible tanks for fuel according to the preceding claim, further comprising a further outer lamination (8), externally applied on said fifth outer layer (7), exhibiting anti-ageing action against ozone and atmospheric agents.

3. The structure for flexible tanks for fuel according to claims 1 or 2, wherein said synthetic fiber fabric (2) is selected from the group comprising polyamide, polyester, aramid fibers, and the like.

4. The structure for flexible tanks for fuel according to claim 1 or 2, wherein said first, third and fifth layer (1, 3 ,7) of polymer rubber blend are made of a material selected from the group comprising blend of nitrile elastomers, blend of epichlorohydrin elastomers, blend of fluorinated elastomers, and the like.

5. The structure for flexible tanks for fuel according to claim 1 or 2, wherein said fourth median layer (6) of fireproof material comprises silica fiber felt containing 93-95% SiO₂.

6. The structure for flexible tanks for fuel according to the preceding claim, wherein said silica felt has a ≥200 gr/m2 density and a resistance to temperatures of up to 1000°C.

7. The structure for flexible tanks for fuel according to any one of the preceding claims, wherein said fifth layer (7) of synthetic elastomer-based blend comprises intumescent charges in a quantity not lower than the 10% by weight with respect to the total weight of the blend.

8. The structure for flexible tanks for fuel according to the preceding claim, wherein said fifth outer layer (7) of synthetic elastomer-based blend comprises expansible lamellar graphite in a quantity not lower than the 10% by weight with respect to the total weight of the blend.

9. The structure for flexible tanks for fuel according to any one of the preceding claims, wherein said fifth median layer (7) of synthetic elastomer-based blend has the following composition by weight with respect to the total weight of the blend:
| | |
|---|---|
| Polymers | 29.5 |
| Plasticizer | 0.21 |
| Activator | 1.00 |
| Mineral charges | 21.3 |
| Flame-retardant charge | 1.46 |
| (Chlorinated paraffin and/or paraffin) oils | 11.8 |
| Age resister against chemical/physical agents | 0.2 |
| Carbon black | 0.6 |
| Intumescent charges | ≥ 30.0 |
| Sulphur | 0.36 |

10. The structure for flexible tanks for fuel according to any one of the preceding claims, wherein said first, third and fifth layer of polymer rubber blend (1,3,7) further comprise retarding substance charges in a quantity of 0.04 % b/w with respect to the total weight of the blend.

11. The structure for flexible tanks for fuel according to any one of the preceding claims 2 to 10, wherein said further outer lamination (8) externally applied on said fifth outer layer (7) exhibiting anti-ageing action against ozone and atmospheric agents is a methylethylketone solution of an elastomer-based blend charged with a vinyl acetate resin.

## Patentansprüche

1. Struktur für flexible Tanks für Kraftstoff bzw. Treibstoff, umfassend:
• eine erste Schicht (1) einer kraftstoffbeständigen Mischung auf Elastomerbasis, welche die Innenoberfläche des Tanks bildet, wenn dieser aufgebaut ist;
• eine zweite Gewebeschicht (2), hergestellt aus einem synthetischen Fasergewebe, welches auf der ersten Schicht (1) aufgebracht ist; und
• eine dritte Schicht (3) aus einer kraftstoffbeständigen Mischung auf Elastomerbasis, welche oberhalb dieses Gewebes (2) aufgebracht ist, **dadurch gekennzeichnet, dass** sie des Weiteren umfasst:
• eine vierte mittlere Schicht (6) aus feuerfestem Material umfassend Siliziumdioxidfaserfilz, angeordnet oberhalb der dritten Schicht (3); und
• eine fünfte Außenschicht (7) aus einer Mischung auf der Basis von synthetischem Elastomer, angereichert mit flammenverzögernden und anschwellenden Erzeugnissen, aufgebracht oberhalb der vierten mittleren Schicht (6).

2. Struktur für flexible Tanks für Kraftstoff gemäß des vorangehenden Anspruchs, des Weiteren umfassend eine weitere äußere Beschichtung (8), welche extern auf die fünfte Außenschicht (7) aufgebracht ist und eine Anti-Alterungswirkung gegen Ozon und atmosphärische Mittel (atmospheric agents) zeigt.

3. Struktur für flexible Tanks für Kraftstoff gemäß Anspruch 1 oder 2, wobei das synthetische Fasergewebe (2) aus der Gruppe gewählt ist, umfassend Polyamid-, Polyester-, Aramidfasern und dergleichen.

4. Struktur für flexible Tanks für Kraftstoff gemäß Anspruch 1 oder 2, wobei die erste, dritte und fünfte Schicht (1, 3, 7) aus Polymergummimischung aus einem Material hergestellt ist, gewählt aus der Gruppe umfassend Mischung aus Nitrilelastomeren, Mischung aus Epichlorhydrinelastomeren, Mischung aus fluorierten Elastomeren und dergleichen.

5. Struktur für flexible Tanks für Kraftstoff gemäß Anspruch 1 oder 2, wobei die vierte mittlere Schicht (6) aus feuerfestem Material Siliziumdioxidfaserfilz umfasst, enthaltend 93 bis 95 % SiO₂.

6. Struktur für flexible Tanks für Kraftstoff gemäß einem der vorangehenden Ansprüche, wobei der Siliziumdioxidfilz eine Dichte ≥ 200 g/m² und eine Beständigkeit gegenüber Temperaturen von bis zu 1000°C aufweist.

7. Struktur für flexible Tanks für Kraftstoff gemäß einem der vorangehenden Ansprüche, wobei die fünfte Schicht (7) aus einer Mischung auf der Basis von synthetischem Elastomer anschwellende Einsatzstoffe bzw. Füllstoffe in einer Menge von nicht weniger als 10 Gew.-%. in Bezug auf das Gesamtgewicht umfasst.

8. Struktur für flexible Tanks für Kraftstoff gemäß einem der vorangehenden Ansprüche, wobei die fünfte Außenschicht (7) aus einer Mischung auf der Basis von synthetischem Elastomer ein sich ausdehnendes lamellares Graphit in einer Menge von nicht weniger als 10 Gew.-%. in Bezug auf das Gesamtgewicht der Mischung umfasst.

9. Struktur für flexible Tanks für Kraftstoff gemäß einem der vorangehenden Ansprüche, wobei die fünfte mittlere Schicht (7) aus einer Mischung auf der Basis von synthetischem Elastomer die folgende Gewichtszusammensetzung in Bezug auf das Gesamtgewicht der Mischung aufweist:
| | |
|---|---|
| Polymere | 29,5 |
| Weichmacher | 0,21 |
| Aktivator | 1,00 |
| Mineralischer Einsatzstoff bzw. Füllstoff | 21,3 |
| Flammenverzögernder Einsatzstoff bzw. Füllstoff | 1,46 |
| (chlorinierte Paraffin und / oder Paraffin) Öle | 11,8 |
| chemische / physikalische Mittel alterungsbeständiges Mittel | 0,2 |
| Carbon Black | 0,6 |
| Anschwellendee Einsatzstoff bzw. Füllstoff | ≥ 30,0 |
| Schwefel | 0,36 |

10. Struktur für flexible Tanks für Kraftstoff gemäß einem der vorangehenden Ansprüche, wobei die erste, dritte und fünfte Schicht aus Polymergummimischung (1, 3, 7) des Weiteren Einsatzstoff bzw. Füllstoff aus verzögernden Substanzen in einer Menge von 0,04 Gew.-%. (b/w) in Bezug auf das Gesamtgewicht der Mischung umfasst.

11. Struktur für flexible Tanks für Kraftstoff gemäß einem der vorangehenden Ansprüche 2 bis 10, wobei die weitere äußere Beschichtung (8), welche extern auf die fünfte Außenschicht (7), aufgebracht wird, die eine Anti-Alterungswirkung gegen Ozon und atmosphärische Mittel zeigt, eine Metylethylketon-Lösung aus einer Mischung auf Elastomerbasis ist, angereichert mit einem Vinylacetat-Harz.

## Revendications

1. Structure pour réservoirs flexibles pour carburant, comportant :
• une première couche (1) d'un mélange à base d'élastomère résistant au carburant formant la surface intérieure du réservoir une fois assemblé,
• une deuxième couche de tissu (2) constituée d'un tissu de fibres synthétiques appliqué au-dessus de ladite première couche (1), et
• une troisième couche (3) d'un mélange à base d'élastomère résistant au carburant appliqué au-dessus dudit tissu (2), **caractérisée en ce qu'**elle comporte de plus :
• une quatrième couche médiane (6) d'un matériau résistant au feu comportant un feutre de fibres de silice agencée au-dessus de ladite troisième couche (3), et
• une cinquième couche extérieure (5) d'un mélange à base d'élastomère synthétique chargé de produits ignifuges et intumescents, appliquée au-dessus de ladite quatrième couche médiane (6).

2. Structure pour réservoirs flexibles pour carburant selon la revendication précédente, comportant de plus un laminage extérieur supplémentaire (8), appliqué de manière externe sur ladite cinquième couche extérieure (7), affichant une action anti-vieillissement à l'encontre de l'ozone et d'agents atmosphériques.

3. Structure pour réservoirs flexibles pour carburant selon la revendication 1 ou 2, dans laquelle ledit tissu de fibres synthétiques (2) est choisi parmi le groupe comportant des fibres de polyamide, de polyester, d'aramide, et analogue.

4. Structure pour réservoirs flexibles pour carburant selon la revendication 1 ou 2, dans laquelle lesdites première, troisième et cinquième couches (1, 3, 7) d'un mélange de caoutchouc polymère sont constituées d'un matériau choisi parmi le groupe comportant un mélange d'élastomères de nitrile, un mélange d'élastomères d'épichlorohydrine, un mélange d'élastomères fluorés, et analogue.

5. Structure pour réservoirs flexibles pour carburant selon la revendication 1 ou 2, dans laquelle ladite quatrième couche médiane (6) de matériau résistant au feu comporte un feutre de fibres de silice contenant 93-95 % de SiO₂.

6. Structure pour réservoirs flexibles pour carburant selon la revendication précédente, dans laquelle ledit feutre de silice a une densité ≥ 200 g/m² et une résistance à des températures allant jusqu'à 1 000 °C.

7. Structure pour réservoirs flexibles pour carburant selon l'une quelconque des revendications précédentes, dans laquelle ladite cinquième couche (7) d'un mélange à base d'élastomère synthétique comporte des charges intumescentes selon une quantité qui n'est pas inférieure à 10 % en poids par rapport au poids total du mélange.

8. Structure pour réservoirs flexibles pour carburant selon la revendication précédente, dans laquelle ladite cinquième couche extérieure (7) d'un mélange à base d'élastomère synthétique comporte du graphite lamellaire expansible selon une quantité qui n'est pas inférieure à 10 % en poids par rapport au poids total du mélange.

9. Structure pour réservoirs flexibles pour carburant selon l'une quelconque des revendications précédentes, dans laquelle ladite cinquième couche médiane (7) d'un mélange à base d'élastomère synthétique a la composition suivante, en poids par rapport au poids total du mélange :
| | |
|---|---|
| Polymères | 29,5 |
| Plastifiant | 0,21 |
| Activateur | 1,00 |
| Charges minérales | 21,3 |
| Charge ignifuge | 1,46 |
| Huiles (paraffine chorée et/ou paraffine) | 11,8 |
| Agent anti-vieillissement contre des | |
| agents chimiques/physiques | 0,2 |
| Noir de carbone | 0,6 |
| Charges intumescentes | ≥ 30,0 |
| Soufre | 0,36 |

10. Structure pour réservoirs flexibles pour carburant selon l'une quelconque des revendications précédentes, dans laquelle lesdites première, troisième et cinquième couches d'un mélange de caoutchouc polymère (1, 3, 7) comportent de plus des charges de substance retardatrice selon une quantité de 0,04 % b/w par rapport au poids total du mélange.

11. Structure pour réservoirs flexibles pour carburant selon l'une quelconque des revendications 2 à 10, dans laquelle ledit laminage extérieur supplémentaire (8) appliqué de manière externe sur ladite cinquième couche extérieure (7) affichant une action anti-vieillissement à l'encontre de l'ozone et d'agents atmosphériques est une solution de méthyléthylcétone d'un mélange à base d'élastomère chargé d'une résine d'acétate de vinyle.
